# EUROPÄISCHE PATENTSCHRIFT

(11) **EP 3 288 821 B1**
(45) Veröffentlichungstag und Bekanntmachung des Hinweises auf die Patenterteilung: **02.08.2023**
(21) Anmeldenummer: 16715278.4
(22) Anmeldetag: 01.04.2016
(51) Int. Cl.: B62H 5/00, B62H 5/14, B62H 5/20

(54) **WEGFAHRSPERRE FÜR ZWEIRÄDER**
IMMOBILISER FOR TWO-WHEELED VEHICLES
SYSTÈME D'IMMOBILISATION DESTINÉ À DES DEUX-ROUES

(30) Priorität: 29.04.2015 DE 102015005419
(43) Veröffentlichungstag der Anmeldung: 07.03.2018
(73) Patentinhaber: haveltec GmbH, 14770 Brandenburg an der Havel (DE)
(72) Erfinder: ANUTH, Christian, 14778 Brandenburg an der Havel (DE); WEINTRAUT, Markus, 14776 Brandenburg an der Havel (DE); WERNER, Christian, 14476 Potsdam (DE)
(74) Vertreter: Weisse, Renate
(86) Internationale Anmeldenummer: PCT/EP2016/057254
(87) Internationale Veröffentlichungsnummer: WO 2016/173804

(56) Entgegenhaltungen:
- EP-A1- 2 437 222
- EP-A1- 2 504 223
- EP-A2- 1 057 720
- EP-A2- 1 818 246
- EP-B1- 2 504 223
- WO-A1-2014/044111
- WO-A1-2016/048421
- DE-A1- 19 741 643
- DE-A1-102004 054 331
- DE-U1-202012 009 617
- Ted Johnson: "ScatoLOCK: Automatic Bike Lock with Hidden Smart Key #kickstarter | BikeShopHub Blog", , 1. April 2013 (2013-04-01), XP055280754, Gefunden im Internet: URL:http://www.bikeshophub.com/blog/2013/0 4/01/scatolock-automatic-bike-lock-with-hi dden-smart-key/ [gefunden am 2016-06-15]
- Kate Puhala: "Behold the World's First Keyless, Foldable, App-Connected Bike!", , 4. April 2014 (2014-04-04), XP055280777, Gefunden im Internet: URL:http://www.brit.co/gibike/ [gefunden am 2016-06-15]
- Christopher Mcgraw: "SPECS / REVIEWS FOR SALE Crowdfunding Combat: BitLock vs. Lock8 Smart Bike Locks", Autoblog.com, 29. Oktober 2013 (2013-10-29), Seiten 1-9, XP055281138, www.autoblog.com Gefunden im Internet: URL:http://www.autoblog.com/2013/10/29/cro wdfunding-combat-bitlock-vs-lock8-smart-bi ke-locks/ [gefunden am 2016-06-16]
- Lock8: "LOCK8 - the World's First Smart Bike Lock by LOCK8 - Kickstarter", , 28. August 2013 (2013-08-28), XP055280799, Gefunden im Internet: URL:https://www.kickstarter.com/projects/l ock8/lock8-the-worlds-first-smart-bike-loc k/description [gefunden am 2016-06-15]
- Thijs Not Retrieved: "6 Smart Keyless Bike Locks - hobbr", , 23. Dezember 2014 (2014-12-23), XP055280814, Gefunden im Internet: URL:http://www.hobbr.com/6-smart-keyless-b ike-locks/ [gefunden am 2016-06-15]
- JoJaqs: "JoJaqs crowd sourced funding example (Kickstarter and Indie-gogo) Looplock", YouTube, 10. September 2014 (2014-09-10), Seiten 1-1, XP054976608, Gefunden im Internet: URL:https://www.youtube.com/watch?v=MSTdBx 3SS-o [gefunden am 2016-06-20]
- Christopher Mcgraw: "Crowdfunding Combat: BitLock vs. Lock8 Smart Bike Locks - Autoblog", , 29 August 2013 (2013-08-29), XP055280784, Retrieved from the Internet: URL:http://www.autoblog.com/2013/10/29/cro wdfunding-combat-bitlock-vs-lock8-smart-bi ke-locks/ [retrieved on 2016-06-15]

## Beschreibung

### Technisches Gebiet

Die Erfindung betrifft eine Wegfahrsperre für Fahrräder und andere von einer Person angetriebene Fahrzeuge, welche von einem sperrenden Zustand in einen Fahrzustand umschaltbar ist, enthaltend
(a) Mittel zur manipulationssicheren Befestigung der Wegfahrsperre am Fahrzeug, und
(b) eine Steuereinheit zum Umschalten der Wegfahrsperre vom sperrenden in den Fahrzustand und umgekehrt, wobei die Steuereinheit die Wegfahrsperre in den sperrenden Zustand umschaltet, wenn der Abstand einen Schwellwert überschreitet und das Fahrzeug gleichzeitig nicht fährt, und in den Fahrzustand umschaltet, wenn der Abstand einen Schwellwert unterschreitet; und
(c) die Steuereinheit einen Empfänger für drahtlos übertragene Signale eines zugehörigen, mobilen Senders aufweist, und
(d) die Steuereinheit Mittel zur Bestimmung ihres Abstands zu dem mobilen Sender aufweist.

Mit einer Wegfahrsperre wird eine für den Fahrbetrieb zwingend erforderliche Funktionalität des Fahrzeugs abgeschaltet oder der Fahrbetrieb blockiert. Ein typisches Beispiel für eine solche Wegfahrsperre ist ein Rahmenschloss. Bei einem Fahrrad mit elektrischem Antrieb ist es aber auch möglich, die Aktivierung des Antriebs zu blockieren, so dass der Fahrbetrieb durch den Motorwiderstand behindert wird.

Fahrräder und andere Fahrzeuge, die von Personen angetrieben werden, werden zunehmend im urbanen Bereich für alltägliche Besorgungen eingesetzt. Ein Problem ist nach wie vor der Schutz des Fahrzeugs vor Diebstahl. Neben Kabel-, Bügel- oder Faltschlössern haben sich fest am Fahrradrahmen montierte Rahmenschlösser bewährt.

Unter Fahrrädern werden einspurige Fahrzeuge verstanden, welche durch Muskelkraft oder mit einem Antrieb fortbewegt werden können. Dazu zählen ebenso Räder mit einem Stütz- bzw. Zusatzrad. Solche Fahrzeuge sind z. B. Lastenräder, E-Bikes, Pedelecs, S-Pedelecs, Dreiräder, Laufräder, Tretroller, Fahrräder und dergleichen. Ausgenommen sind Kraftfahrzeuge, wie z. B. Personenkraftwagen und Lastkraftwagen, bei denen der Antrieb nicht durch eine Person, sondern ausschließlich durch einen Motor erfolgt.

### Stand der Technik

Bekannte Rahmenschlösser blockieren durch einen mechanischen Schließbügel die Drehbewegung eines der Räder. Dadurch wird das unbefugte Benutzen des Fahrzeugs erschwert bzw. verhindert. Bereits bekannt sind Rahmenschlösser, welche über einen motorisch angetriebenen Schließbügel verfügen. So wird zum Beispiel in der EP 2357124 A2 eine elektromechanisch angetriebene Wegfahrsperre dargestellt.

Wie bei den von Hand betätigten Rahmenschlössern ist es erforderlich den Mechanismus manuell zu sperren oder zu entsperren. Auch elektronisch gesteuerte Schlösser, etwa WO 2014/044111 A1 oder die unter den Handelsnamen "Bitlock" und "Lock8" vertriebenen Wegfahrsperren müssen mit einem elektronischen Schlüssel entsperrt werden. Ein solcher elektronischer Schlüssel kann eine Fernbedienung oder ein Mobiltelefon sein. Dabei ist es umständlich und zeitraubend gerade für kurze Besorgungen das Rad mittels verschiedener Bedienschritte zu sichern und zu entsichern. Dementsprechend bieten die bekannten Ausführungen eines Rahmenschlosses keinerlei Komfortgewinn für den Nutzer.

Es ist ferner das elektrische GI Flybike bekannt, das auch in der US 2015/0353160 A1 beschrieben ist. Für das GI Flybiky ist eine Wegfahrsperre bekannt, die ein Abstandsabhängiges Schließsystem aufweisen soll. Wie dieses Schließsystem arbeitet und aufgebaut ist, ist der Fachwelt nicht offenbart. DE 197 41 643 A1 offenbart eine Vorrichtung zur Sicherung von Fahrrädern, welche versteckt im Steuerrohr oder Tretlager angeordnet sind, damit ein potentieller Dieb die Sicherungsvorrichtung und deren Status nicht erkennen kann. Die Sicherung wird über eine Kontrolleinheit betätigt, die anspricht, wenn eine externe Bedienungseinheit weiter als z.B. 1 m vom Fahrrad entfernt wird. Nachteilig bei dieser Anordnung ist es, dass die Kontrolleinheit auch dann anspricht, wenn die Batterie der Bedienungseinheit nicht mehr ausreichend geladen ist. Eine Überprüfung des Status der Sicherungsvorrichtung ist nicht möglich. DE 197 41 643 A1 offenbart alle Merkmale des Oberbegriffs des Anspruchs 1.

Anders als bei motorbetriebenen Fahrzeugen ist bei Fahrzeugen mit Personenantrieb und insbesondere bei Fahrrädern kein Motor vorhanden, der eine natürliche Wegfahrsperre bildet, wenn er nicht aktiviert wird. Bei solchen Fahrzeugen ist immer ein zusätzliches Schloss oder dergleichen erforderlich, das eigens in einen sperrenden Zustand versetzt werden muss.

### Offenbarung der Erfindung

Es ist Aufgabe der Erfindung, das Sichern eines Fahrzeugs der eingangs genannten Art vor Diebstahl schneller und komfortabler zu gestalten.

Erfindungsgemäß wird die Aufgabe dadurch gelöst, dass
(e) die Wegfahrsperre ein am Fahrzeug befestigbares Schloss mit einer Blockiervorrichtung zum Blockieren der Raddrehung umfasst, wobei die Blockiervorrichtung als gekrümmter Schließbügel ausgebildet ist, der zum Sperren zwischen die Speichen eines Rads bewegbar ist, und (f) ein von der Steuereinheit gesteuerter Motor zum Antrieb der Blockiervorrichtung vorgesehen ist.

Bei der erfindungsgemäßen Lösung ist eine Einheit fest in die Wegfahrsperre integriert, die zweite Einheit ist eigenständig und mobil verwendbar. Diese Einheiten sind geeignet den Abstand zwischen Nutzer mit dem mobilen Sender und dem Fahrzeug mit der Steuereinheit zu ermitteln. Davon abhängig wird die Wegfahrsperre gesteuert.

Die Wegfahrsperre umfasst ein am Fahrzeug befestigbares Schloss mit einer Blockiervorrichtung zum Blockieren der Raddrehung. Insbesondere kann vorgesehen sein, dass die Blockiervorrichtung angetrieben und ein Rad blockiert bzw. entriegelt wird. Die erfindungsgemäße Lösung hat den Vorteil, dass ohne eine Bedienhandlung des Nutzers eine Sicherung des Fahrzeugs vor Diebstahl möglich wird. Durch die erfindungsgemäße Lösung kann eine Diebstahlsicherung des Rades nicht vergessen werden. Die Erfindung vereinfacht insbesondere den Diebstahlschutz, wenn für die Nutzung eines klassischen Schlüssels und die Bedienung des Schlosses keine Zeit ist oder anderweitige Einschränkungen vorhanden sind. Ebenso besteht nicht die Gefahr mit verschmutzten Teilen des Fahrzeugs in Berührung zu kommen, wie dies etwa bei einem klassischen Rahmenschloss mit mechanischer Betätigung der Fall ist.

Die Erfindung ist mit einem von der Steuereinheit gesteuerter Motor zum Antrieb der Blockiervorrichtung vorgesehen. Dann wird der Motor zum Sperren aktiviert. Es ist aber auch möglich, den Motor eines Hilfsantriebs zu blockieren. Dann verhindert die Motorbremse, dass das Fahrzeug verwendet werden kann. Statt eines Rades können auch andere Komponenten, etwa Lenker oder Pedale oder dergleichen blockiert werden.

Erfindungsgemäß ist vorgesehen, dass die Blockiervorrichtung als gekrümmter Schließbügel ausgebildet ist, der zum Sperren zwischen die Speichen eines Rads bewegbar ist. Dabei kann der Schließbügel insbesondere einen verzahnten Winkelbereich aufweisen, in welchen ein von dem Motor angetriebenes Zahnrad eingreift.

Eine weitere Ausgestaltung der Erfindung sieht vor, dass die Steuereinheit und der mobile Sender bidirektional kommunizierende Sende- und Empfangseinheiten umfassen und der Abstand aus der Signalstärke eines zwischen der Steuereinheit und dem mobilen Sender ausgetauschten Signals bestimmt wird.

Der Empfänger in der Steuereinheit kann insbesondere zum Empfang und zur Verarbeitung der Signale eines Smartphones, Tablets oder anderen mobilen Endgeräts ausgebildet sein. Der Nutzer verfügt beispielsweise über einen mobilen Sender, ein Mobiltelefon oder Smartphone, welches durch eine Funkverbindung zur bidirekionalen Funkeinheit der Steuereinheit an der Wegfahrsperre Kontakt aufnehmen kann. Dabei kann die Steuereinheit über ein Messverfahren die Sende- oder Empfangsstärke des Signals ermitteln. Das Messergebnis kann dazu genutzt werden, den Abstand zwischen Steuereinheit am Fahrzeug und mobilem Sender beim Nutzer zu ermitteln. Eine Steuerungslogik entriegelt oder sichert das Fahrzeug in Abhängigkeit vom Abstand zwischen mobilem Sender und Steuereinheit der Wegfahrsperre.

In einer bevorzugten Ausgestaltung wird die Funkverbindung mittels der Bluetooth Technologie oder vergleichbarer RF Technologie ausgeführt. Dabei dient ein kompatibles Endgerät oder ein mobiler Sender als digitaler Schlüssel. Anders als bei bekannten Anordnungen und Schlüsseln für Kraftfahrzeuge erfolgt die Entsperrung und Sperrung ohne jeden Eingriff durch den Nutzer "automatisch". Maßgeblich sind nur der Abstand und der Fahrzustand des Fahrzeugs. Ein bewegtes Fahrzeug wird zu keinem Zeitpunkt gesperrt.

Die Verwendung einer codierten Übertragung der Signale bietet als zusätzliche Ausgestaltung Schutz vor unbefugtem Zugriff oder Manipulation. Dabei kann beispielsweise eine erste Einrichtung durch die Verknüpfung eines einmaligen digitalen Schlüssels (z.B.: ein Identifikationscode) mit dem mobilen Sender dieser einen ausschließlichen Zugang gewähren. Der ausgetauschte Code wird permanent in einem Speicher der Steuereinheit abgelegt und nach verschlüsselter Übertragung durch den mobilen Sender mit dem Speicherinhalt abgeglichen. Ein positiver Abgleich gibt die Steuerung zum Umschalten zwischen den Zuständen frei.

In einer weiteren vorteilhaften Ausgestaltung kann die Wegfahrsperre mittels einer Smartphone Applikation vom Nutzer individuell konfiguriert werden. Dabei kann die Empfindlichkeit der nachstehend beschriebenen Sensorik, der Abstand für den Sperrungs- und/oder Entsperrungsvorgang, der Ladezustand einer nachstehend beschriebenen Energieversorgung, sowie weitere Zustände dargestellt oder konfiguriert werden. Ebenso kann ein digitaler Schlüssel für die Wegfahrsperre an andere Nutzer weiter geben werden. Dies ermöglicht es, das Fahrzeug zu verleihen ohne persönlich einen Schlüssel übergeben zu müssen.

Die Wegfahrsperre kann einen Sensor zur Ermittlung der Rotationsgeschwindigkeit eines Fahrzeugrads umfassen. Aus der Rotationsgeschwindigkeit kann ermittelt werden, ob das Fahrzeug fährt oder nicht. Die Wegfahrsperre sperrt ein fahrendes Fahrzeug nicht. Auf diese Weise wird sichergestellt, dass der Verlust des mobilen Senders während der Fahrt keine unerwünschte und potentiell gefährliche Sperre auslöst.

Alternativ oder zusätzlich kann die Wegfahrsperre einen Neigungs- und/oder Beschleunigungssensor umfassen. Damit kann beispielsweise erfasst werden, ob das gesperrte Fahrzeug hochgehoben oder auf andere Weise bewegt wird. Eine solche Bewegung lässt ggf. auf einen Diebstahl schließen, der durch akustische und/oder optische Warnsignale angezeigt wird. Eine solche Bewegung kann auch von der Steuereinheit an den Sender, etwa ein mobiles Endgerät, mitgeteilt werden, so dass der Nutzer geeignete Maßnahmen ergreifen kann. Der Sensor kann zusätzlich auch zur Detektion des Fahrzustandes eingesetzt werden. Dann sind zwei voneinander unabhängige Sensorsysteme für diese Aufgabe verfügbar. Dadurch wird Redundanz erreicht.

Vorzugsweise weist die Wegfahrsperre einen durch die Fahrbewegung aufladbaren Akkumulator zur Versorgung der Steuereinheit und/oder der Sensoren mit elektrischer Energie auf. Es können aber auch herkömmliche Batterien, Solarzellen, oder auf andere Weise aufladbare Akkumulatoren vorgesehen sein. Es kann bei einem Fahrzeug mit elektrischem Hilfsantrieb auch die hierfür vorgesehene Energieversorgung verwendet werden. Die Energieversorgung wird durch einen in das Gehäuse integrierten Akkumulator sichergestellt. Dabei dient beispielsweise das Energiesystem eines E-Bike oder der Nabendynamo bzw. die Lichtmaschine eines Fahrrads als Versorgung des integrierten Akkumulators. Eine Ladeelektronik stellt darüber hinaus die ständige Verfügbarkeit des integrierten Akkumulators sicher und steuert die Ladevorgänge. Für die Notfallversorgung ist eine Schnittstelle vorgesehen, welche das Nachladen durch ein externes Netzteil oder anderweitige externe Energiequellen (z.B. Smartphone, Notfall-Akkupack, Solarmodul, etc.) ermöglicht.

Vorzugsweise befinden sich an einer zugänglichen Gehäuseaußenseite zwei elektrisch leitfähige und gekennzeichnete Kontaktstellen. Wird ein handelsüblicher 9V Batterieblock in korrekter Polarität an die Kontaktstellen gehalten, ist eine Notversorgung, im Falle einer leeren internen Batterie, jederzeit möglich.

Bei einer besonders bevorzugten Ausgestaltung der Erfindung sind Sensoren zur Erfassung von untypischen Zuständen und optische und/oder akustische Mittel zur Erzeugung eines Warnsignals bei Vorliegen eines untypischen Zustands vorgesehen. Ein solcher untypischer Zustand ist eine Bewegung des Fahrzeugs, die auf einen Diebstahl schließen lässt. Es können aber auch andere Zustände hinsichtlich Gewicht, Temperatur oder dergleichen erfasst werden.

Vorzugsweise verfügt die Wegfahrsperre über ein geschlossenes, schlagzähes Außengehäuse, welches Befestigungspunkte für das Verschrauben am Fahrradrahmen bietet. Ein innerer Rahmen aus Stahlblech nimmt die Antriebsmechanik des Schließbügels auf und schützt die verschiedenen Komponenten der Sperre vor Manipulation.

In einer weiteren vorteilhaften Gestaltung verfügt die Wegfahrsperre über verschiedene Befestigungspunkte um die Befestigung an Aufnahmepunkte der Fahrradrahmen mit verschiedenen Positionen und Abständen gewährleisten zu können.

Vorteilhafterweise ist die Wegfahrsperre mit einer Sensorik in Form eines Beschleunigungs- bzw. Neigungssensors und einem Radrotationsgeber ausgestattet. Die Auswertung der Signale durch einen Steuerungsalgorithmus stellt eine Erkennung des Fahrbetriebes sicher und verhindert einen Verriegelungsvorgang während der Fahrt.

In einer weiteren bevorzugten Ausgestaltung ermöglicht die Detektion einer anliegenden Ladespannung oder die Signalauswertung des E-Bike Antriebssystems die Detektion des Fahrbetriebes.

In einer bevorzugten Ausgestaltung ist die Wegfahrsperre mit einer akustischen Diebstahlwarnanlage ausgestattet. Ein Schallwandler gibt bei Neigung bzw. Erschütterung des Fahrrads und bei Durchtrennung der Blockiervorrichtung ein Warnsignal ab. Vorteilhaft ist die Übertragung einer Meldung eines Diebstahlversuches mittels einer Funkverbindung auf die mobile Funkeinheit bzw. ein Smartphone. Dadurch kann der Fahrradbesitzer alarmiert werden.

In einer bevorzugten Ausgestaltung ist die Blockiervorrichtung als ein runder, außenverzahnter Schließbügel ausgeführt, welcher durch einen Antrieb in Bewegung versetzt werden kann. Der Antrieb wird durch ein eingreifendes Zahnrad, welches wiederum durch einen Elektromotor angetrieben wird erzeugt. Mit Hilfe dieser Antriebsmechanik kann der Schließbügel in eine Öffnungs- und in eine Verriegelungsstellung verfahren werden.

Vorzugsweise wird der Schließbügel durch ein zusätzliches Verriegelungselement in Form eines Hubmagnetenbolzens jeweils in der Öffnungs- und Verriegelungsstellung gesichert. Dadurch ist es möglich, das Bewegen des Schließbügels entgegen der eingenommenen Endstellung zuverlässig zu verhindern. Der Hubmagnetenbolzen ist federbelastet und greift selbsttätig in die, an der Schließbügelflanke, angebrachten Bohrungen ein. Der Entriegelungsvorgang erfolgt durch die angeschlossene Steuereinheit, welche den Hubmagnetenbolzen abhängig von der Steuerungslogik entgegen der Federspannung aus der Bohrung zieht und den Antrieb des Schließbügels wieder frei gibt. Ist die nächste Endlage erreicht, sichert der Hubmagnetenbolzen wieder selbsttätig.

In einer weiteren vorteilhaften Gestaltung wird der Schließbügel durch einen nockengetriebenen, federbelasteten Riegel, welcher in eine Vertiefung des Schließbügels in Öffnungs- und Verriegelungsstellung eingreift, in seiner Position gehalten.

Vorteilhaft ist die Führung des Schließbügels am rotierenden Innenkreis durch reibungsarme Führungsrollen auszuführen, welche durch die Abstandsbolzen des inneren Gehäuserahmens aufgenommen werden. Ebenso wird die Führung des Schließbügels in der Ebene der Rotationsachse durch innen liegende Führungsrippen des Außengehäuses sichergestellt. Am angetriebenen Umfang wird die Bewegung des Schließbügels jeweils durch das Antriebszahnrad sowie durch ein Führungszahnrad reibungsarm sichergestellt. Durch die erfindungsgemäße Gestaltung der Schließbügelführung kann eine langlebige und reibungsarme Bewegung des Schließbügels mit dem Einsatz von wenigen, kostengünstig herzustellenden Komponenten erreicht werden.

Bevorzugt wird die Rotation des Schließbügels jeweils durch einen Endanschlag begrenzt. Der Endanschlag kann beispielsweise in Form eines Stiftes, welcher am Umfang des Schließbügels in einer Bohrung sitzt, begrenzt werden. Dabei verfügt der Schließbügel jeweils für die Öffnungs- und Verriegelungsstellung über einen Endanschlag. Der Endanschlag entsteht dabei durch die Begrenzung des Rotationsweges bei Anliegen des jeweiligen Endanschlagstiftes an einen Abstandsbolzen des Gehäuseinnenrahmens.

In einer weiteren vorteilhaften Gestaltung verfügt die Wegfahrsperre über einen zusätzlichen Verriegelungsmechanismus für ein Stahlkabel oder eine Stahlkette. Das Zweirad kann mit Hilfe eines Stahlkabels oder einer Stahlkette mit der Umgebung, zum Beispiel einem Fahrradständer oder einem Zaun, verschlossen werden. Diese Erweiterung erhöht den Diebstahlschutz und ermöglicht es weitere Komponenten des Rades zu sichern.

Die Erfindung ist besonders vorteilhaft bei Fahrrädern, die mit Muskelkraft angetrieben werden und daher durch einen abgeschalteten Antrieb nicht blockiert werden.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig. 1: stellt einen Schnitt in der Rotationsebene eines Schließbügels einer Wegfahrsperre in Form eines Rahmenschlosses in der Öffnungsstellung dar.
- Fig. 2: zeigt den Schließbügel aus Figur 1 in der Verriegelungsstellung.
- Fig. 3: ist ein Querschnitt durch die Anordnung aus Figur 1 senkrecht zur Rotationsebene des Schließbügels.
- Fig. 4: zeigt eine Explosionsdarstellung der Komponenten der Anordnung aus Figur 1.
- Fig. 5: zeigt anhand eines Blockschaltbildes die Ausführung einer Steuereinheit.
- Fig. 6: illustriert die Montage der Wegfahrsperre in Form eines Rahmenschlosses an einem gängigen Fahrradrahmen.
- Fig. 7: zeigt anhand eines Blockschaltbildes eine alternative Ausführung einer Steuereinheit.
- Fig. 8: zeigt ein Smartphone mit einer mobilen Applikation für ein Bedienmenü für den Nutzer.
- Fig. 9: zeigt ein Smartphone mit einer mobilen Applikation für ein Konfigurationsmenü für den Nutzer.
- Fig. 10: zeigt eine mobile Einheit in Form eines Schlüsselanhängers, welcher geeignet ist den Öffnungs- und Verriegelungsvorgang der Wegfahrsperre als Alternative zu einem Smartphone oder Tablet entsprechend Figur 9 abstandsabhängig zu steuern.
- Fig. 11: ist eine Explosionsdarstellung einer Sperrvorrichtung eines Schließbügels für Fahrräder, der mit Hilfe eines federbelasteten Riegels geschlossen wird entsprechend einem zweiten Ausführungsbeispiel.
- Fig. 12: zeigt die Anordnung aus Figur 11 in einer zweiten Ansichtsperspektive.
- Fig. 13: zeigt die Anordnung aus Figur 11 in Freigabestellung.
- Fig. 14: zeigt die Anordnung aus Figur 11 in Sperrstellung.
- Fig. 15: zeigt ein weiteres, alternatives Antriebsprinzip des Schließbügels mittels eines Schneckenantriebes von vorne.
- Fig. 16: zeigt die Anordnung aus Figur 15 von hinten.
- Fig. 17: ist eine Draufsicht auf die Anordnung aus Figur 15.
- Fig. 18: zeigt ein Rahmenschloss mit einem Verriegelungsmechanismus, welcher in Lage ist ein zusätzliches Stahlkabel oder eine Stahlkette im Rahmenschloss zu versperren

### Beschreibung der Ausführungsbeispiele

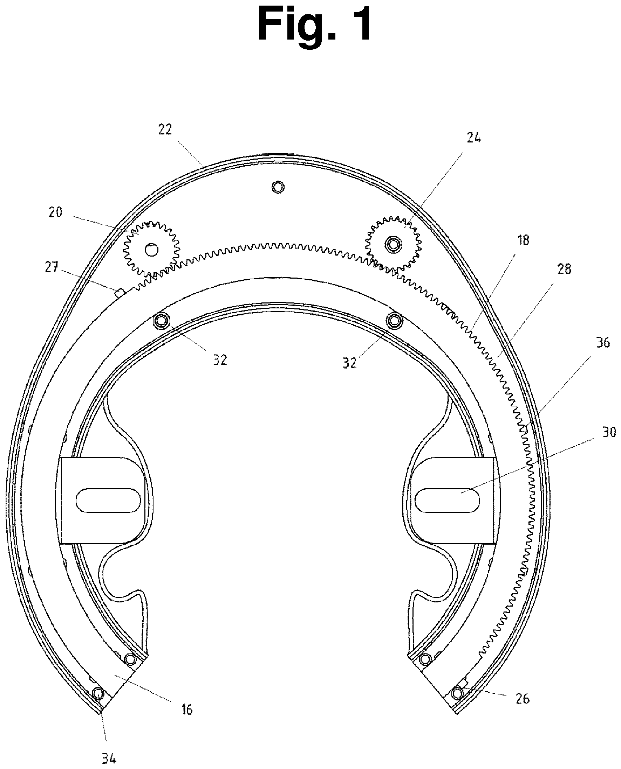

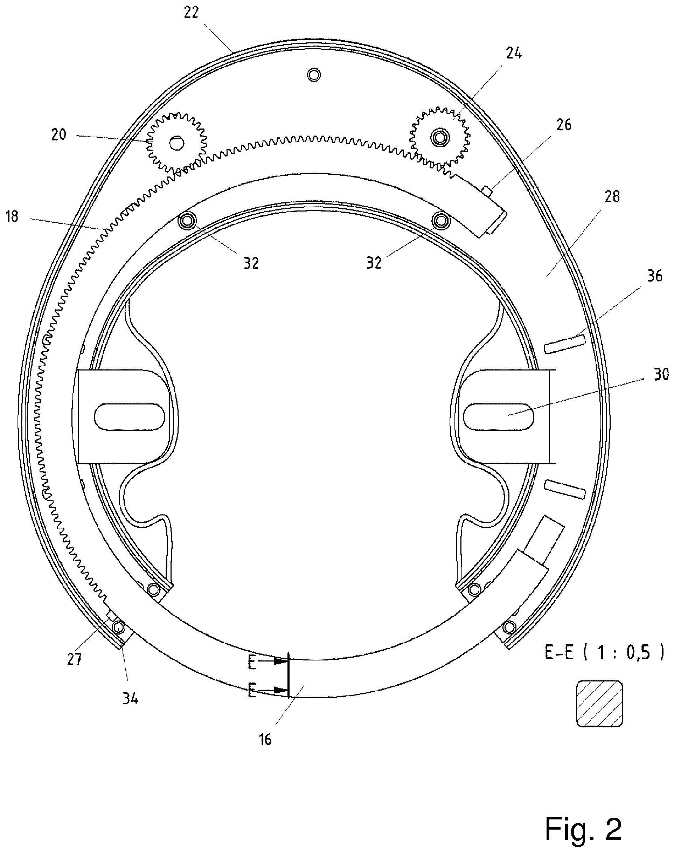

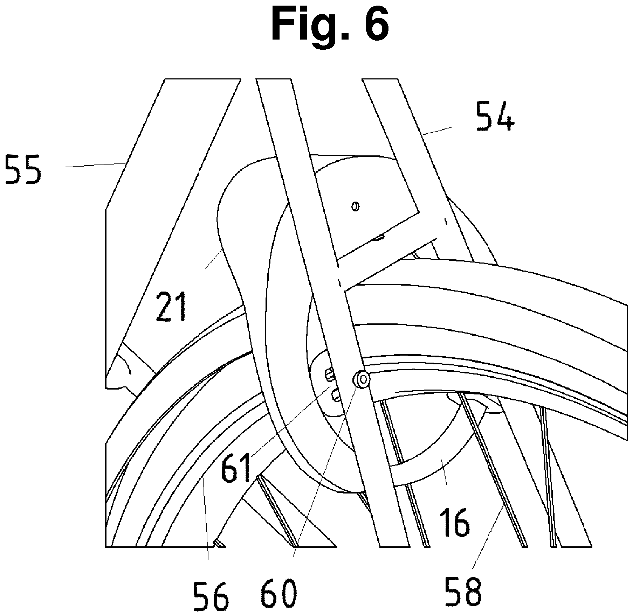

Figur 1 zeigt eine Wegfahrsperre in Form eines Rahmenschlosses für Fahrräder oder andere Zweiräder. Das Rahmenschloss 21 ist, wie in Figur 6 dargestellt, fest mit dem Rahmen 55 eines Fahrrads verbunden. Ein an dem Rahmenschloss 21 vorgesehener Schließbügel 16 wird zum Sperren zwischen die Speichen eines Rades 56 bewegt und blockiert dann die Rotation des Rads 56. Der Schließbügel 16 ist allseitig mit einer Rundung versehen, um die Führung in der in Figur 2 gezeigten Verriegelungsstellung zu verbessern. Ein Gehäuse 22 nimmt die mechanischen und elektronischen Komponenten auf. Ein innerer Blechrahmen 28 ist mit dem Gehäuse 22 verbunden und wird durch Abstandsbolzen 34 mit einem zweiten Rahmen 31 verschraubt und mit einem Abstand fixiert.

Zwei Montageaufnahmen 30 ermöglichen den Anbau an einen Fahrradrahmen 55, welcher mit Gewindebohrungen 60 zur Aufnahme von handelsüblichen Rahmenschlössern ausgestattet ist. Als Führung des Schließbügels 16 dienen zwei Zahnräder 20 und 24, sowie mehrere radial angeordnete Führungsrippen 36, zwei Führungsrollen 32 und Abstandsbolzen 34. Zwei Führungsrollen 32 dienen der reibungsarmen Lagerung des Schließbügels 16. Das Zahnrad 20 hat ferner die Aufgabe den Schließbügel 16 anzutreiben. Eine Verzahnung 18 am Umfang des Schließbügels 16 ermöglicht die Übertragung der Antriebskräfte des Antriebsmotors 42 und die Umwandlung in eine Rotationsbewegung des Schließbügels 16. Jeweils ein Stift 26 bildet in der Öffnungs- und ein Stift 27 in der Verriegelungsstellung den Endanschlag durch Sperrung gegen einen Abstandsbolzen 34.

Figur 1 zeigt den Schließbügel 16 in geöffneter Stellung. Dann ist das Rad 56 nicht blockiert. Figur 2 zeigt die gleichen Komponenten wie Figur 1. In Figur 2 ist der Schließbügel 16 in der Verriegelungsstellung zu sehen.

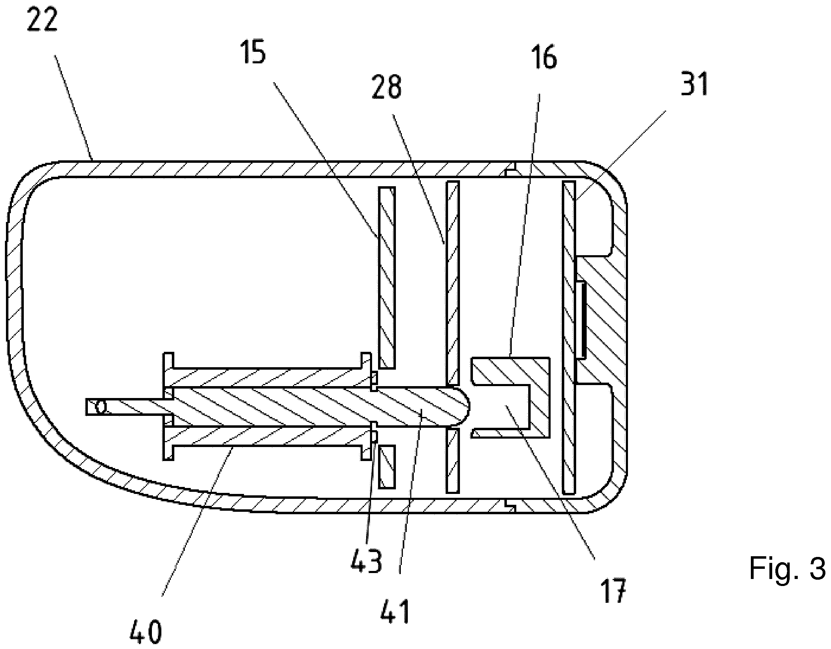

In Figur 3 ist die Sperrvorrichtung des Schließbügels 16 mittels eines Hubmagneten 40 und eines Hubmagnetenbolzens 41 dargestellt. Dabei wird unter dem Begriff "Sperren" der Zustand verstanden, bei dem es darum geht den Schließbügel in seiner Position zu sichern. Beim Verriegeln steht die Blockierung des Rades 56 durch den Schließbügel im Vordergrund Der Schließbügel 16 verfügt über zwei Vertiefungen 17 und 19. Die Vertiefung 17 ist für die Blockierung in der Öffnungsstellung des Schließbügels 16 vorgesehen. Die Vertiefung 19 ist für die Blockierung in der in Figur 2 gezeigten Verriegelungsstellung des Schließbügels 16 vorgesehen. Der Hubmagnetenbolzen 41 ist mit einer Feder 43 federbelastet und arretiert selbsttätig in einer der Vertiefungen 17 bzw. 19, sobald der Schließbügel 16 eine der Endpositionen eingenommen hat. Der Hubmagnet 40 wird mit dem Gehäuse 22 verschraubt und durch den antriebsseitigen Blechrahmen 28 geführt. Die Leiterplatine 15 befindet sich hinter den Blechrahmen 31 und 28.

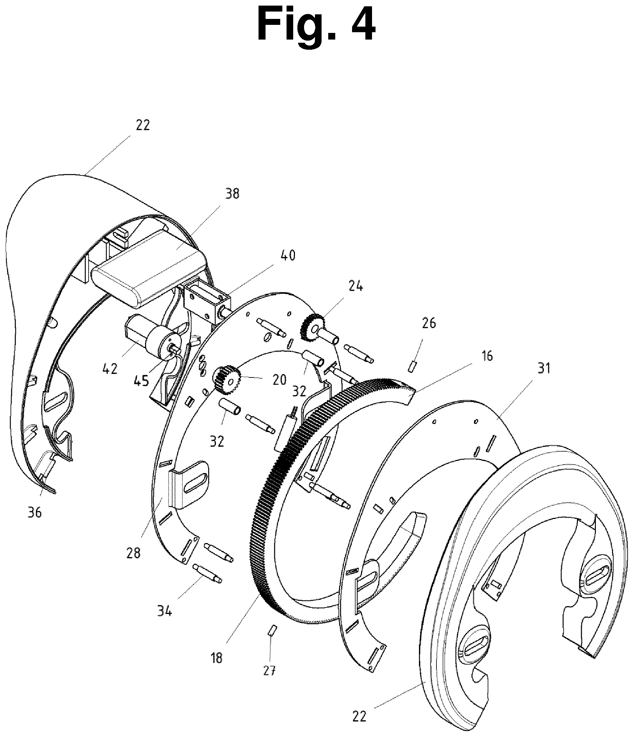

Figur 4 zeigt das Gehäuse 22, welches einen Energieträger, etwa einen Akkumulator 38 oder eine Batterie und den Hubmagneten 40 aufnimmt. Ein Antriebsmotor 42 ist mit dem antriebsseitigen Blechrahmen 28 fest verschraubt. Das Antriebszahnrad 20 ist kraftschlüssig mit der Antriebswelle 45 des Antriebsmotors 42 verbunden. Der Schließbügel 16 ist derart positioniert und von Zahnrad 24 geführt, dass das Antriebszahnrad 20 formschlüssig in die Verzahnung 18 eingreift und die Antriebskräfte übertragen kann. Das Gehäuse 22 nimmt jeweils einen Blechrahmen 28 bzw. 31 mittels der Führungsrippen 36 auf. Der daraus entstehende Verbund von Gehäuse 22, Blechrahmen 28 bzw. 31 und den Führungsrollen 32 führt den Schließbügel 16, während der Bewegung in die Öffnungs- oder Verriegelungsstellung. Die Öffnungs- oder Verriegelungsstellung wird durch die Endanschläge 26 und 27 begrenzt.

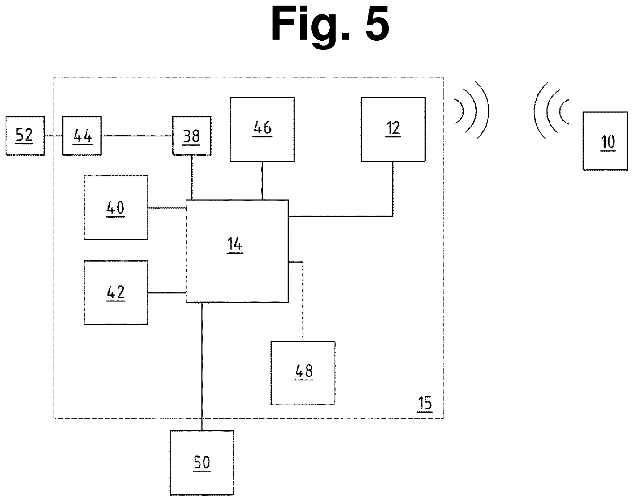

Ein in Figur 5 abgebildetes Blockschaltbild zeigt eine Steuereinheit für den Verriegelungs- bzw. Öffnungsvorgang des Rahmenschlosses 21. Neben dem Rahmenschloss 21 ist eine portable Funkeinheit 10, eine Detektionseinheit für die Radrotation 50 und ein Boardnetz 52 dargestellt. Die im Folgenden beschriebenen Komponenten der Steuerungseinheit befinden sich innerhalb des Gehäuses 22 auf einer Leiterplatine 15. Eine zentrale Steuereinheit 14 dient zur Aufnahme, Verarbeitung und Ausgabe von elektrischen Signalen der angeschlossenen, in Figur 5 dargestellten Komponenten. Eine fest in das Rahmenschloss 21 integrierte bidirektionale Bluetooth-Funkeinheit 12 ist mittels einer Bluetooth Funkverbindung mit einer portablen bidirektionalen Bluetooth-Funkeinheit 10 verbunden. Die portable, bidirektionale Bluetooth-Funkeinheit 10 kann in Form eines Smartphones, Tablets oder eines Transponders ausgeführt sein. In Abhängigkeit vom Abstand der portablen Funkeinheit 10 zum Rahmenschloss 21 setzt die zentrale Steuereinheit 14 den Antriebsmotor 42 und den Hubmagneten 40 in Betrieb. Ist der Abstand der portablen Funkeinheit zum Rahmenschloss 21 größer als beispielsweise 2 Meter wird eine Verriegelung ausgeführt. Ist der Abstand der portablen Funkeinheit zum Rahmenschloss 21 kleiner als beispielsweise 2 Meter wird eine Öffnung ausgeführt. Dabei kann der Nutzer die Abstände (Schwellwerte) für ein Verriegelungs- bzw. Öffnungsvorgang individuell konfigurieren. Eine Hysterese zwischen den Schwellwerten verhindert den ständigen Wechsel von Verriegelungs- und Öffnungsvorgängen bei Schwankungen der Messwerte.

Der Akkumulator 44 versorgt die gesamte in Figur 5 dargestellte Steuerungseinheit und wird von einer Ladeelektronik 38 überwacht. Diese lädt bei Bedarf den Akkumulator 38 über das Boardnetz 52 des Fahrrads nach. Ein Signalgeber 46 erzeugt ein akustisches Alarmsignal zur Abschreckung bei einem Diebstahlversuch und gibt akustische Meldungen über den Zustand des Schlosses aus. Derartige Zustände sind z.B. "niedriger Ladezustand des Akkumulators", "Verriegelungsvorgang konnte nicht abgeschlossen werden", "erfolgreiche Authentifizierung des Nutzers", etc.

Ein Neigungs- und Beschleunigungssensor 48 erkennt Bewegungen des Fahrrads und übermittelt diese Informationen an die zentrale Steuereinheit 14. Ein Algorithmus wertet die Signale aus und steuert den Signalgeber 46 bei einem erkannten Diebstahlversuch an bzw. übermittelt eine Nachricht an die portable Funkeinheit 10 des Besitzers.

In Figur 6 ist das zuvor beschriebene Rahmenschloss 21 an einem Fahrrad montiert Die vielfach an Fahrradrahmen integrierten Gewindebuchsen 60 zur Aufnahme von Zubehör werden als Befestigungspunkte für das Rahmenschloss 21 genutzt. Das Rahmenschloss 21 ist mittels zweier Schrauben (nicht dargestellt) an den vorgesehenen Montageaufnahmen 61 mit den Befestigungspunkten 60 der Rahmenstreben 54 des Fahrradrahmens 54 verbunden. Wenigstens zwei unterschiedlich angeordnete Montageaufnahmen 61 ermöglichen die Befestigung des Rahmenschlosses 21 an verschiedene Aufnahmepunkte 60 eines Fahrradrahmens 55. Der Schließbügel 16 befindet sich in der Verriegelungsstellung zwischen den Radspeichen 58 und verhindert damit eine Drehung des Rades 56.

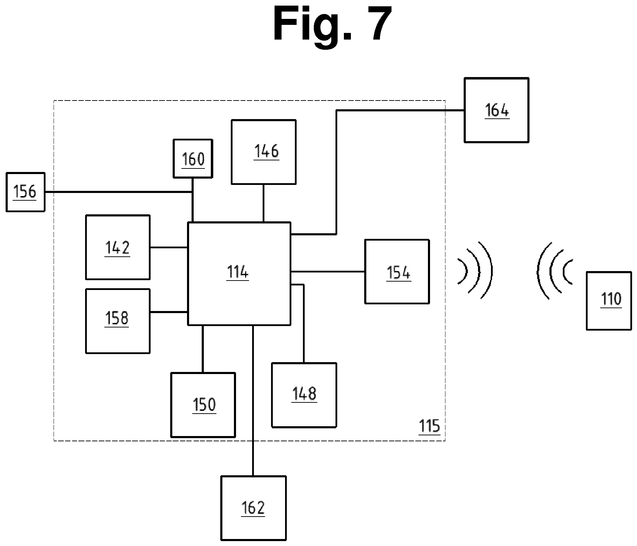

Figur 7 zeigt ein Blockschaltbild für ein alternatives Ausführungsbeispiel. Die Anordnung ist ähnlich wie die in Figur 5 dargestellte mit folgenden Unterschieden: Die Funkeinheit 12 und die zentrale Steuereinheit 14 sind nun in einer Mikrokontroller Einheit 114 zusammen integriert. Es handelt sich hierbei um einen Bluetooth Chip mit einer Antennenkonfiguration 154. Die Detektionseinheit für die Radrotation 150 in Form eines optischen Senders und Empfängers befindet auf der Leiterplatine 115 und kann Radspeichen 58 im Fahrweg des Schließbügels erkennen. Eine elektronische Endlagenerkennung 158 ermöglicht mit Hilfe einer elektrischen Kontaktschleife die Positionserkennung des Schließbügels 16 in der Öffnungs- sowie Verriegelungsstellung. Für die Energieversorgung wird eine nicht nachladbare Lithium Batteriezelle 160 eingesetzt. Bei entladener Batteriezelle 160 kann durch eine zweipolige Kontaktstelle 156 mit Hilfe eines 9V Batterieblocks eine Notversorgung hergestellt werden. Die Verrieglung des Schließbügels 16 in Öffnungs- und Verriegelungsstellung erfolgt ohne einen zweiten Aktor. Ein kapazitiver Sensortaster 162 bildet die Bedienschnittstelle am Rahmenschloss. Dieser kann beispielsweise zur Eingabe eines individuell konfigurierbaren Entriegelungskodes genutzt werden. Eine mehrfarbige Leuchtdiode 164 dient zur Signalisierung von Betriebszuständen des Rahmenschlosses.

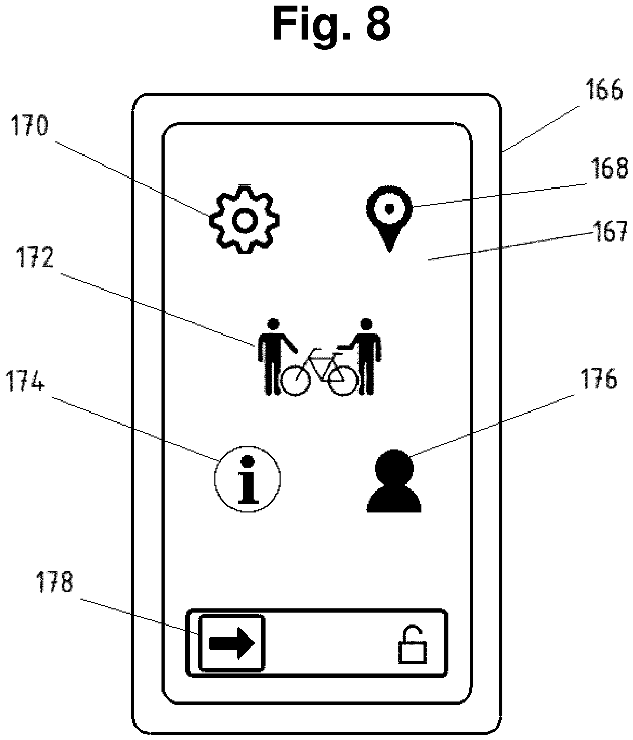

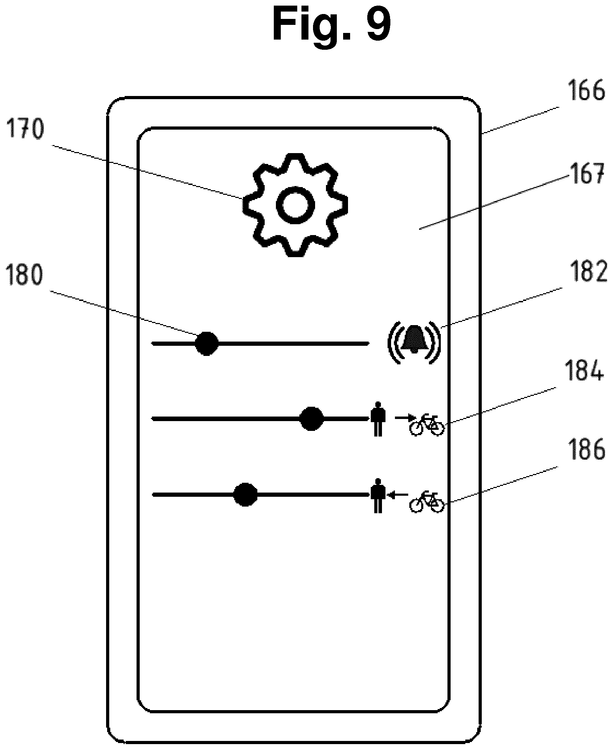

Figur 8 zeigt ein mobiles Endgerät 166, welches auf dem Bildschirm 167 mit Hilfe einer Software ein Bedienmenü für das Rahmenschloss 21 darstellt. Die dargestellten Symbole führen bei der Auswahl jeweils in ein Untermenü mit entsprechenden Optionen. Ein Zahnradsymbol 170 führt zu dem Menü Einstellungen. Dies ist in Figur 9 gezeigt. Ein Standortsymbol 168 führt zur Positionsbestimmung bzw. Positionsdarstellung des Rahmenschlosses 21. Ein Verleihsymbol 172 führt zu einem Untermenü, welches das Teilen des digitalen Schlüssels mit anderen Nutzern erlaubt. Ein Informationssymbol 174 führt zu einem Untermenü, welches Statusinformationen des Rahmenschlosses 21 darstellt. So zum Beispiel Batterieladezustand, Verbindungsstatus, Nutzerkennung, Identifikationsnummer der Wegfahrsperre, Störungsmeldungen und weitere statistische und funktionelle Daten. Ein Benutzersymbol 176 führt zu der Verwaltung des Benutzerkontos. Mit einem digitalen Schieberegler 178 lässt sich das Rahmenschloss 21 per Funkbefehl manuell öffnen bzw. verriegeln. Ein mobiles Endgerät kann ein Smartphone, Tablet oder ein ähnliches Gerät sein.

Figur 9 zeigt ein mobiles Endgerät 166, welches auf dem Bildschirm 167 mit Hilfe einer Software ein Konfigurationsmenü 170 für das Rahmenschloss 21 darstellt. Mehrere digitale Schieberegler 180 ermöglichen die individuelle Anpassung verschiedener Funktionsparameter. Ein Schieberegler mit einem Alarmsymbol 182 ermöglicht die Aktivierung bzw. Deaktivierung, sowie die Wahl der Empfindlichkeit der Alarmfunktion, des Rahmenschlosses 21. Ein Schieberegler mit einem Abstandsymbol "Nutzer in Richtung Fahrrad" 184 ermöglicht die Aktivierung bzw. Deaktivierung, sowie die Wahl des Abstandes der abstandsabhängigen Öffnungsfunktion, des Rahmenschlosses 21. Ein Schieberegler mit einem Abstandsymbol "Nutzer in Gegenrichtung Fahrrad" 186 ermöglicht die Aktivierung bzw. Deaktivierung, sowie die Wahl des Abstandes der abstandsabhängigen Verriegelungsfunktion, des Rahmenschlosses 21.

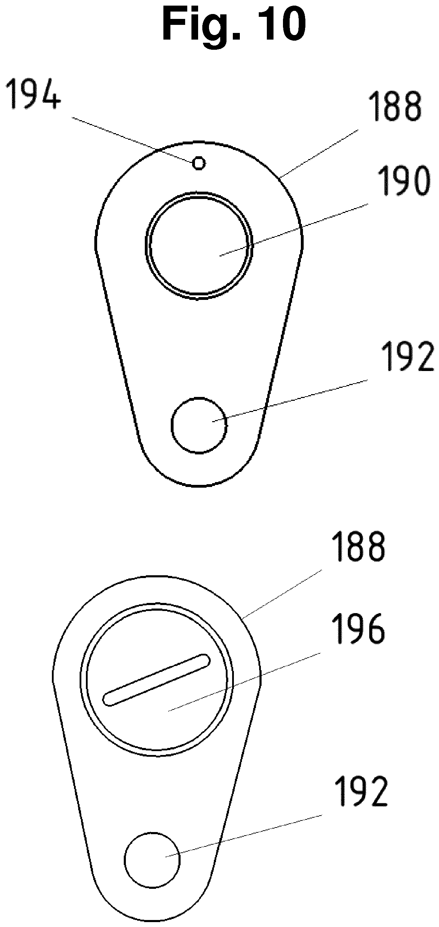

Figur 10 zeigt einen Transponder in Form eines Schlüsselanhängers 188. Der Schlüsselanhänger ist geeignet das abstandsabhängige Verriegeln und Öffnen des Rahmenschlosses 21 zu steuern und kann als Alternative zu einem Smartphone, Tablet oder einem ähnlichen mobilen Endgerät genutzt werden. Der Schlüsselanhänger verfügt dabei nicht über die Möglichkeit das Rahmenschloss 21 individuell zu konfigurieren sondern ermöglicht ausschließlich die Nutzung der Kernfunktion des abstandsabhängigen Verriegelns und Öffnens, sowie die Übermittlung von Statusmeldungen, wie Diebstahlwarnung, Zustand der Energiezelle und dem Verbindungsstatus. Der Schlüsselanhänger 188 ist mit einer Durchführung 192 ausgestattet, welche zur Befestigung an einem Schlüsselring oder einem Armband (nicht dargestellt) geeignet ist. Ein Taster 190 ist dazu geeignet durch Tastendruck die Wegfahrsperre durch ein Funksignal manuell zu öffnen oder zu verriegeln. Eine Leuchtdiode 194 ermöglicht dem Nutzer Betriebszustände zu erkennen, wie zum Beispiel eine kritischen Batteriezustand, einen Diebstahlalarm und weitere Funktionsmeldungen. Ein Batteriefach 196 ermöglicht den Austausch der innen liegenden Batteriezelle.

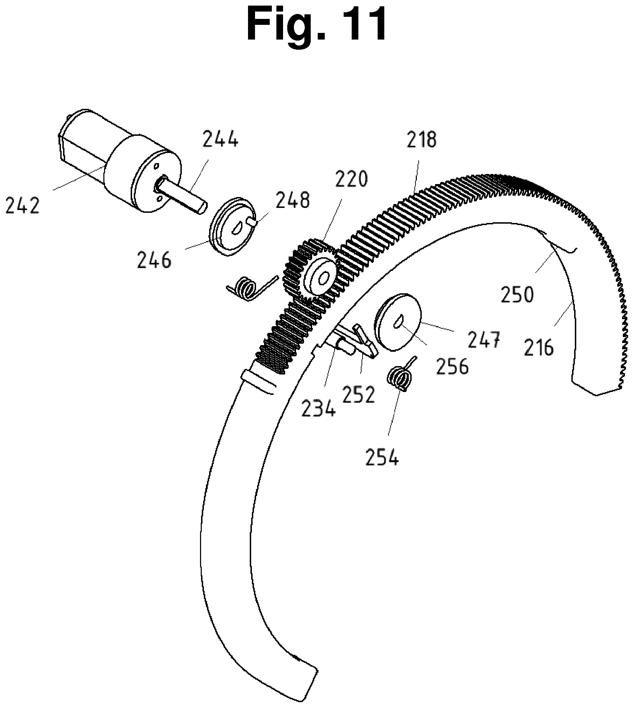

Figur 11 zeigt eine alternative Sperrvorrichtung eines Schließbügels 216 mit Hilfe eines federbelasteten Riegels 252. Der Antriebsmotor 242 ist mit einer abgesetzten halbrunden Antriebswelle 244 ausgerüstet. Die Antriebswelle 244 nimmt kraftschlüssig die zwei Entriegelungsnocken 246 und 247 durch die geometrisch gestalteten Wellaufnahmen 256 und freilaufend das Antriebszahnrad 220 auf. Der Entriegelungsnocken 246 verfügt über einen Mitnehmerstift 248. Das Antriebszahnrad 220 wälzt kraft- und formschlüssig auf dem mit einer Verzahnung 218 ausgestatteten Schließbügel 216 ab. Auf einem Abstandsbolzen 234 werden eine Doppelschenkelfeder oder zwei Schenkelfedern 254 gehalten und in der Bewegung geführt. Der Riegel 252 kann federbelastet in die Vertiefungen 250 des Schließbügels 216 eingreifen.

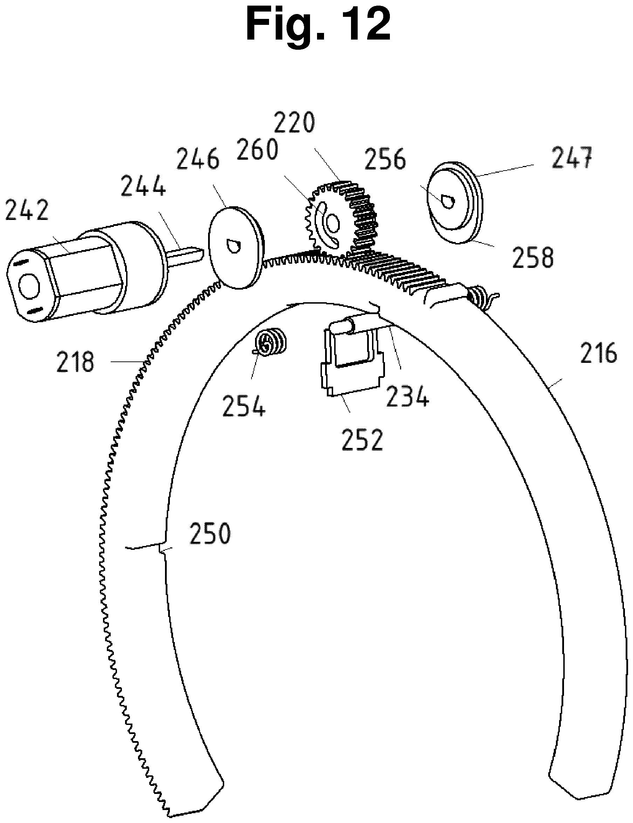

Figur 12 zeigt in einer weiteren Ansichtsperspektive neben den in Figur 11 dargestellten Bestandteilen zusätzlich die Führungsnut 260 des Antriebszahnrades 220 und die geometrische Form der Nockenkurve 258 der Entriegelungsnocken 246 und 247.

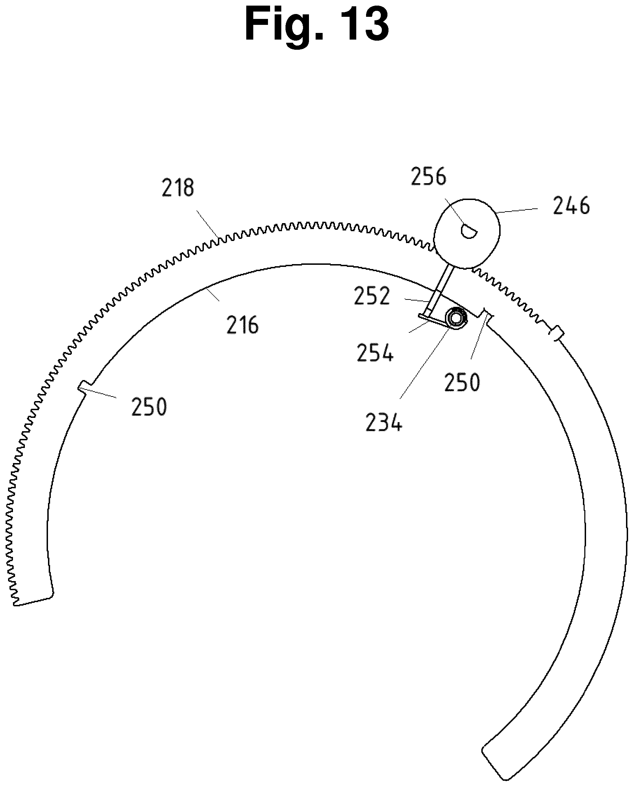

Figur 13 zeigt den Mechanismus der Sperrvorrichtung in der Frontansicht. Der Mechanismus ist in der Freigabestellung dargestellt. Der Riegel 252 hat die Vertiefung 250 des Schließbügels 216 zwangsgeführt durch den Antrieb der Entriegelungsnocken 246 und 247 verlassen. Der Schließbügel 216 wurde durch den Antriebsmechanismus in Rotation versetzt und hat die Sperrstellung (siehe Figur 13) verlassen.

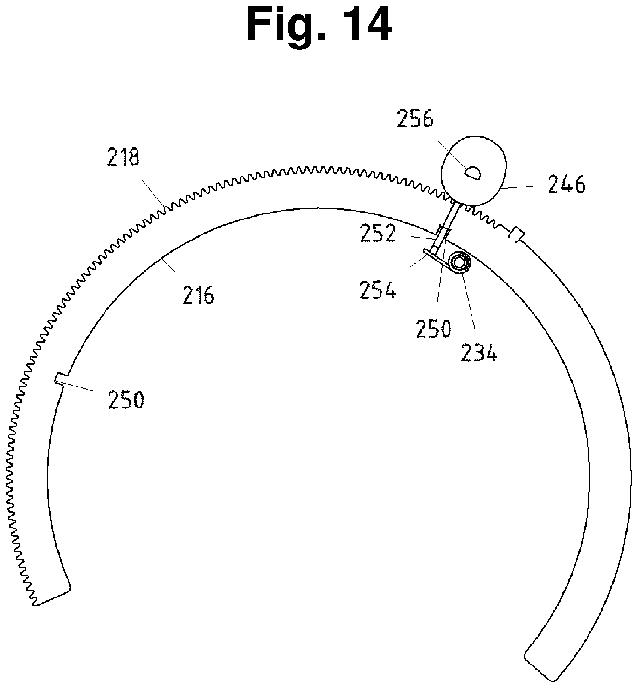

Figur 14 zeigt den Mechanismus der Sperrvorrichtung in der Frontansicht. Der Mechanismus ist in der Sperrstellung dargestellt. Die Position der Entriegelungsnocken 246 und 247 ermöglichen dem Riegel 252 federbelastet in die Vertiefung 250 des Schließbügels 216 einzurasten und damit die Rotationsbewegung des Schließbügels 216 zu sperren.

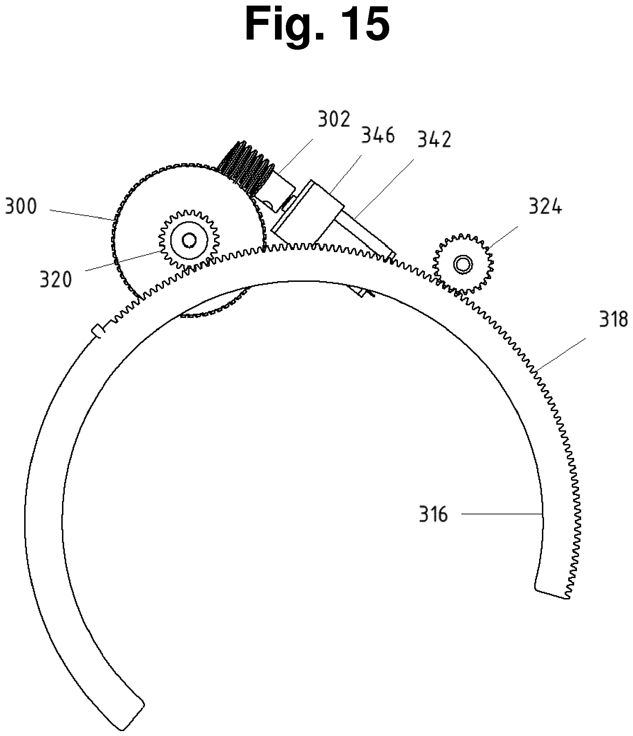

Figur 15 zeigt ein alternatives Antriebsprinzip mittels eines Schneckengetriebes. Auf der Antriebswelle des Antriebsmotors 342 ist eine Antriebsschnecke 302 befestigt. Die Antriebsschnecke 302 greift kraft und formschlüssig in das Schneckenrad 300 ein. Das Schneckenrad 300 ist kraftschlüssig mit einer Antriebswelle 344 verbunden. Mit dieser Antriebswelle 344 ist ebenfalls das Antriebszahnrad 320 kraftschlüssig verbunden. Das Antriebszahnrad 320 greift kraft- und formschlüssig in die Verzahnung 318 des Schließbügels 316 ein. Ebenso greift das Führungszahnrad 324 in die Verzahnung 318 des Schließbügels 316 ein.

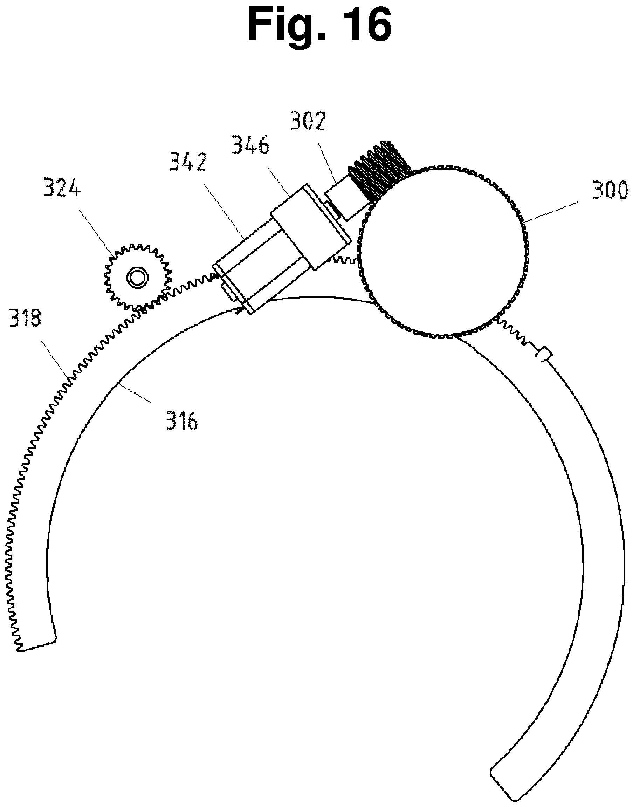

Figur 16 zeigt das Antriebsprinzip in der Rückansicht.

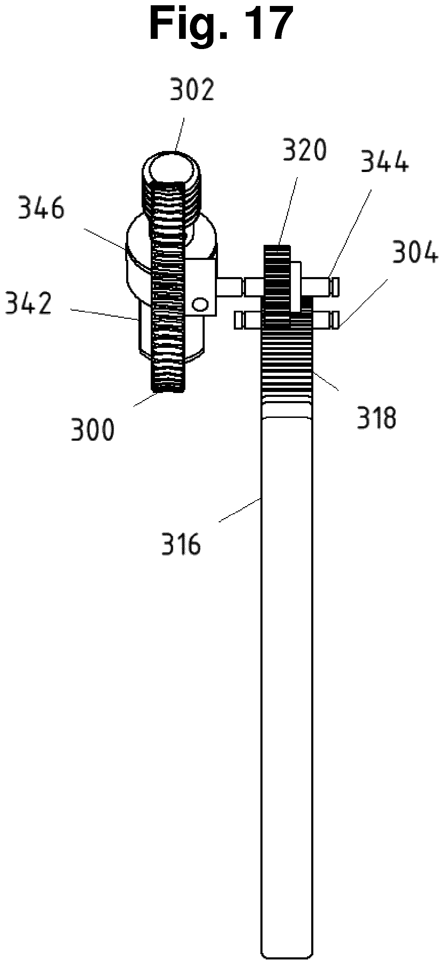

Figur 17 zeigt das Antriebsprinzip in einer Draufsicht. Neben den Bestandteilen, welche in Figur 15 und 16 dargestellt sind, zeigt Figur 17 die Antriebswelle 344 sowie die Welle 304 des Führungszahnrades.

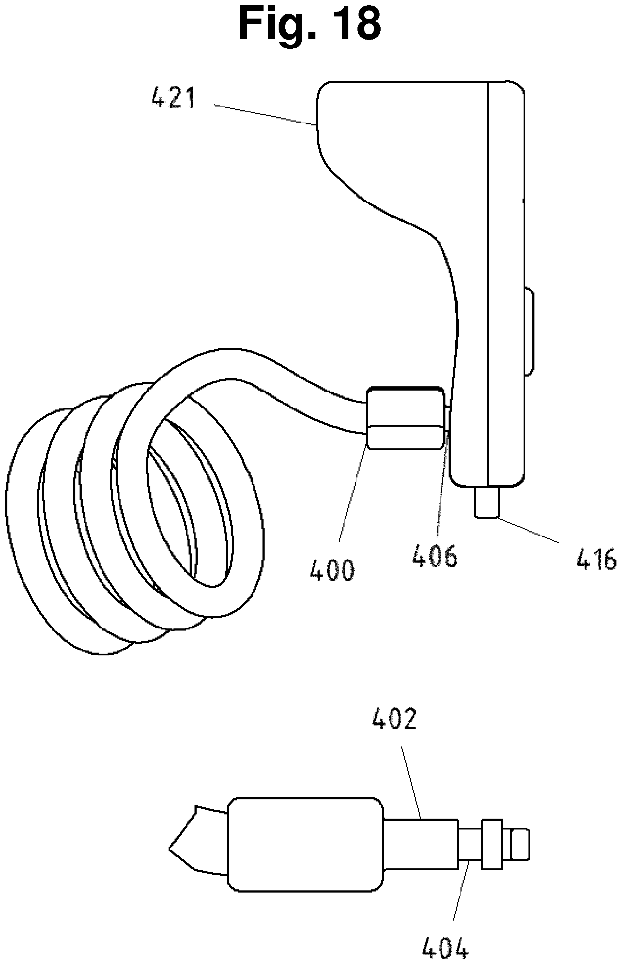

Figur 18 zeigt ein Rahmenschloss 421 welches mit einer Aufnahmeöffnung 406 ausgestattet ist, welche dazu geeignet einen Bolzen 402 aufzunehmen und zu verriegeln. Der Bolzen 402 ist fest mit einem Stahlkabel verbunden und verfügt über einen umlaufende Nut 404. In der Verrieglungsstellung des Schließbügels 416 wird der zuvor in die Aufnahmeöffnung 406 eingesteckte Bolzen 402 versperrt.

### Die beschriebene Anordnung arbeitet wie folgt:

In einer Ausgangssituation befindet sich der Schließbügel 16 des Rahmenschlosses, wie in Figur 2 dargestellt, in der Verriegelungsstellung. Eine Endlagenerkennung 158 liefert der zentralen Steuereinheit 14 eine Rückmeldung über die Ausgangsposition. Das Hinterrad 56 des Fahrrads ist durch den Schließbügel 16 blockiert und ein Fahren des Rades ist nicht möglich.

Die bidirektionale Funkeinheit 12 des Rahmenschlosses sendet in periodischen Abständen ein Identifizierungssignal aus. Die portable bidirektionale Funkeinheit 10 trägt der Fahrradbesitzer (z.B. in einer Hosentasche, an einem Schlüsselbund, in einem Rucksack, etc.) mit sich. Der Fahrradbesitzer befindet sich außerhalb der Funkreichweite des Rahmenschlosses.

Die portable Funkeinheit 10 sucht in periodischen Abständen nach dem Identifizierungssignal der Funkeinheit 12. Bewegt sich der Fahrradbesitzer mit der portablen Funkeinheit in die Reichweite der Funkeinheit 12 wird anhand des Identifizierungssignales eine verschlüsselte Funkverbindung zueinander aufgebaut. Ist die Funkverbindung etabliert beginnt mittels eines Messverfahrens die Ermittlung des Abstandes zwischen den Funkeinheiten 10 und 12. Als Messgröße dient die Empfangsfeldstärke des eingehenden Funksignals. Dieser Wert wird durch das Generic Attribute Profile (GATT) des Bluetooth Low Energy Standards zur Verfügung gestellt. Der Indikator für die Empfangsfeldstärke wird als RSSI (Received Signal Strength Indicator) Wert bezeichnet. Je höher die gemessene Feldstärke ist, desto geringer ist der Abstand zwischen den Funkeinheiten 10 und 12. Solange die Feldstärke einen festgelegten Wert nicht überschreitet, verbleibt das Rahmenschloss in der Verriegelungsstellung. Zur Validierung der Messwerte wird ein algorithmisches Mittelwertverfahren eingesetzt, welches in Abhängigkeit der Messzeit mehrere Werte zur Ergebnisbildung verrechnet.

Unterschreitet der Fahrradbesitzer einen festgesetzten Abstand zu dem Fahrrad steigt die Signalstärke über den voreingestellten Wert. Ist der Schwellwert überschritten wird eine unmittelbare Näherung des Nutzers erkannt und der Öffnungsvorgang eingeleitet. Der Abstand innerhalb dessen eine Öffnung bzw. Verriegelung erfolgt kann im Bereich zwischen 50 Zentimetern und 30 Metern liegen und von dem Nutzer nach Bedarf konfiguriert werden.

Die zentrale Steuereinheit 14 wertet die Ergebnisse der Feldstärkemessung aus und steuert in Abhängigkeit den Öffnungsvorgang. Die abstandsabhängige Steuerung des Öffnungs- bzw. Verriegelungsvorganges des Rahmenschlosses kann durch das mobile Endgerät 166 oder den mobilen Transponder 188 als auch am Rahmenschloss 21 selbst manuell ausgeführt werden. Dabei verfügen das mobile Endgerät 166, der mobile Transponder und das Rahmenschloss über entsprechende Bedienelemente in Form von Sensortasten oder Tastern.

Zunächst wird der Hubmagnetenbolzen 41 mittels der Ansteuerung des Hubmagneten 40 aus der Sperrstellung, entgegen der Federvorspannung gezogen. Damit wird der Öffnungsvorgang des Schließbügels 16 frei gegeben. Anschließend wird der Antriebsmotor 42 mit einer gepolten Gleichspannung derart versorgt, dass das verbundene Antriebszahnrad 20 sich gegen den Uhrzeigersinn (siehe Figur 2) dreht. Die Verzahnung wandelt wiederum die Drehbewegung des Antriebszahnrads 20 in eine Rotation des Schließbügels 16 im Uhrzeigersinn um. Der Schließbügel 16 wird bis in seine Endlage bewegt (siehe Figur 1). Dabei wird der Hubmagnetenbolzen 41 wieder aus der Zwangsstellung gelassen und liegt durch die Federvorspannung an der Flanke des Schließbügels 16 an.

Erreicht der Hubmagnetenbolzen 41 die Vertiefung 17 an der Schließbügelflanke wird der Schließbügel 16 selbsttätig gesperrt. Die Endlagenerkennung 158 signalisiert der zentralen Steuereinheit 14 das Erreichen der Öffnungsstellung. Wird das Fahrrad benutzt, erkennt die Detektionseinheit für die Radrotation 50 den Fahrbetrieb und die zentrale Steuereinheit 14 sperrt einen Verrieglungsvorgang. Zusätzlich werden durch den Neigungs- und Beschleunigungssensor 48 die Bewegungen im Fahrbetrieb bzw. im Stillstand gemessen und von der zentralen Steuereinheit 14 ausgewertet.

So lange die Auswertungen der Signale einen Fahrbetrieb erkennen lassen, wird kein Verriegelungsvorgang gestartet. Wird ein Stillstand des Fahrrads erkannt, werden wiederum die Funkeinheiten 10 und 12 zur Ermittlung des Abstandes zwischen dem Fahrradbesitzer und dem Fahrrad genutzt. Dabei wird wie zuvor beschrieben zur Ermittlung des Abstandes eine Messung der Feldstärke des Funksignales vorgenommen. Überschreitet der Fahrradbesitzer mit der portablen Funkeinheit 10 den eingestellten Abstand zum Fahrrad, wird der Verriegelungsvorgang ausgelöst. Hierbei hebt die zentrale Steuereinheit 14 mittels des Hubmagneten 40 die Sperrung des Schließbügels 16 wieder auf und steuert die Bewegung des Schließbügels 16 in die Verriegelungsstellung. Damit hat das Rahmenschloss 21 die Ausgangsstellung wieder eingenommen.

Der Akkumulator 38 versorgt die verschiedenen Komponenten der Steuerungseinheit, welche in Figur 5 bzw. alternativ in Figur 7 dargestellt ist. So lange sich das Rahmenschloss 21 in der Verriegelungsstellung befindet, werden die Signale des Neigungs- und Beschleunigungssensor 48 von der zentralen Steuereinheit 14 ausgewertet. Überschreiten die gemessenen Werte einen festgelegten Schwellwert, wird mittels des Signalgebers 46 ein akustischer Diebstahlalarm ausgelöst. Ebenso kann die mobile Funkeinheit 10 bei einem Diebstahlversuch eine akustische oder haptische Meldung an den Fahrradbesitzer ausgeben. Damit kann ein Manipulationsversuch am Fahrrad oder das Wegtragen des Fahrrads zuverlässig erkannt werden.

### Eine alternative Anordnung arbeitet wie folgt:

Die Wegfahrsperre ist als ein Rahmenschloss 21 für Zweiräder ausgeführt. Das Messverfahren zur Abstanderkennung, sowie der Antrieb des Schließbügels 216 erfolgen gleichsam der bereits zuvor beschriebenen Anordnung. Bei dieser alternativen Anordnung wird der Schließbügel 216 durch einen federbelasteten Riegel 252 jeweils in der Öffnungs- bzw. Verriegelungsstellung gesichert und blockiert. In einer Ausgangssituation befindet sich der Schließbügel 216 in der Öffnungsstellung. Der Riegel 252 wird durch die Federbelastung der Federn 254 in der Vertiefung 250 des Schließbügels 216 gehalten und sperrt die Bewegung des Schließbügels 216 entgegen der Öffnungsstellung. Der Riegel wird seitlich durch Nuten in dem im Gehäuse befindlichen Blechrahmen 28 und 31 geführt und ermöglicht eine lotgerechte Bewegung des Riegels 252 entgegen der Federbelastung.

Wird durch die Steuereinheit ein Verriegelungsvorgang ausgelöst, wird der Antriebsmotor 242 angesteuert und die Antriebswelle 244 in Rotation versetzt. Die mit der Antriebswelle 244 kraftschlüssig verbundenen Entriegelungsnocken 246 und 247 werden dabei ebenfalls in Rotation versetzt. Das Antriebszahnrad 220 ist nicht kraftschlüssig mit der Antriebswelle 244 verbunden und folgt daher der Rotation der Antriebswelle 244 nicht. Es rotieren zunächst beide Entriegelungsnocken 246 und 247 und bewegen auf Grund ihrer Nockenkurvenform 258 den Riegel 252 entgegen der Federvorspannung aus der Vertiefung 250 des Schließbügels 216. Damit ist die Sperrung des Schließbügels 216 in der Öffnungsstellung aufgehoben.

Der Entriegelungsnocken 246 verfügt über einen Mitnehmer in Form eines Stiftes 248. Dieser Stift 248 bewegt sich in der Nut 260 des auf der Antriebswelle 244 anliegenden Antriebszahnrades 220. Sobald die Entriegelungsnocken 246 und 247 den Riegel 252 in die Freigabestellung bewegt haben erreicht der Mitnehmerstift 248 des Entriegelungsnocken 246 das Ende der Nut 260 des Antriebszahnrades 220. In diesem Moment nimmt der Stift 248 das Antriebszahnrad 220 auf Grund der kraft- und formschlüssigen Verbindung mit und versetzt das Antriebszahnrad 220 ebenfalls in Rotation. Das Antriebszahnrad 220 versetzt nun wiederum durch eine kraft- und formschlüssige Verbindung den Schließbügel 216 in Bewegung. Dieser wird dabei in die Verriegelungsstellung bewegt.

Erreicht der Schließbügel 216 die Verriegelungsstellung befinden sich die Entriegelungsnocken 246 und 247 wieder in der Ausgangsposition und der Riegel 252 wird durch die Federbelastung in eine zweite Vertiefung 250 des Schließbügels 216 und damit in die Sperrposition bewegt. In dieser Position kann der Schließbügel 216 nicht durch äußere Einwirkungen entgegen der Verriegelungsposition bewegt werden. Bei einer folgenden Ansteuerung und der damit verbundenen Bewegung des Schließbügels 216 zurück in die Öffnungsstellung arbeitet die Sperrvorrichtung wiederum nach dem zuvor beschriebenen Prinzip.

### Eine alternative Anordnung arbeitet wie folgt:

Die Wegfahrsperre ist als ein Rahmenschloss 21 für Zweiräder ausgeführt. Das Messverfahren zur Abstanderkennung und die davon abhängige Steuerung der Mechanik erfolgen gleichsam der bereits zuvor beschriebenen Anordnung. Bei dieser alternativen Anordnung wird der Antriebsmoment durch ein Schneckengetriebe aufgebracht. Wird der Verriegelungs- oder Öffnungsvorgang durch die Steuereinheit des Rahmenschlosses in Betrieb gesetzt treibt der mit einem Getriebeblock 346 ausgestattete Antriebsmotor 342 mit seiner Antriebswelle eine daran befestigte Getriebeschnecke 302 an. Die rotierende Schnecke 302 treibt wiederum ein Schneckenrad 300 an. Das Schneckenrad 300 treibt durch eine kraftschlüssige Verbindung die Antriebswelle 344 an. Das ebenfalls kraftschlüssig mit der Antriebwelle 344 verbundene Antriebszahnrad 320 wird in Rotation versetzt und treibt durch eine form- und kraftschlüssige Verbindung den Schließbügel 316 an.

In Abhängigkeit der elektrisch gepolten Rotationsrichtung des Gleichstrom-Antriebsmotors 342 wird der Schließbügel entweder in Verriegelungs- oder Öffnungsstellung bewegt. Der Vorteil dieser Anordnung liegt in der selbsthemmenden Wirkung des Schneckengetriebes. Auf Grund dieser Selbsthemmung ist es nicht möglich den Schließbügel 316 durch Einwirkung von außen entgegen der Ausgangsstellung zu bewegen. Damit kann auf eine zusätzliche Sperrvorrichtung des Schließbügels 316 verzichtet werden.

### Eine alternative Anordnung arbeitet wie folgt:

Die Wegfahrsperre ist als ein Rahmenschloss 421 für Zweiräder ausgeführt. Das Messverfahren zur Abstanderkennung, sowie der Antrieb des Schließbügels 416 erfolgen gleichsam der bereits zuvor beschriebenen Anordnung. Die Funktionsweise dieser Anordnung ist unabhängig vom Antriebskonzept oder der Sperrmechanismus des Schließbügels 416. Das Rahmenschloss 421 verfügt über eine Aufnahmeöffnung 406, welche geeignet ist einen Bolzen 402 aufzunehmen und zu verriegeln. Mit dem Bolzen 402 ist beispielsweise ein Stahlkabel 400 oder eine Stahlkette (nicht dargestellt) fest verbunden. Das Stahlkabel 400 oder die Stahlkette (nicht dargestellt) ist dazu geeignet das Rahmenschloss 421 und damit das Zweirad fest mit der Umgebung beispielsweise einem Fahrradständer oder Zaun) zu verschließen. Der Bolzen 402 ist mit einer umlaufenden Nut 404 ausgestattet. Wird der Bolzen 402 in die Aufnahmeöffnung 406 des Rahmenschlosses 421 eingesteckt und ein Verriegelungsvorgang ausgelöst, fährt der angetriebene Schließbügel 416 formschlüssig durch die Nut 404 des Bolzens 402 und verriegelt den Bolzen 402 fest mit dem Rahmenschloss. Damit ist auch das mit der Umgebung verbundene Stahlkabel 400 oder die Stahlkette (nicht dargestellt) fest mit dem Rahmenschloss verbunden. Wird ein Öffnungsvorgang ausgelöst fährt der Schließbügel 416 wieder aus der Nut 404 des Bolzens 402 und gibt diesen wieder frei. Mit dieser Anordnung kann ein Wegtragen des Zweirades sicher verhindert werden.

Die vorstehenden Anordnungen wurden detailliert beschrieben. Es versteht sich aber, dass dies nicht limitierend für den Schutzumfang des Patents sein soll, der ausschließlich durch die Patentansprüche bestimmt wird.

## Patentansprüche

1. Wegfahrsperre für Fahrräder und andere von einer Person angetriebene Fahrzeuge, welche von einem sperrenden Zustand in einen Fahrzustand umschaltbar ist, enthaltend
(a) Mittel zur manipulationssicheren Befestigung der Wegfahrsperre am Fahrzeug,
(b) eine Steuereinheit (14) zum Umschalten der Wegfahrsperre vom sperrenden in den Fahrzustand und umgekehrt, wobei die Steuereinheit (14) die Wegfahrsperre in den sperrenden Zustand umschaltet, wenn der Abstand einen Schwellwert überschreitet und das Fahrzeug gleichzeitig nicht fährt, und in den Fahrzustand umschaltet, wenn der Abstand einen Schwellwert unterschreitet; und
(c) die Steuereinheit (14) einen Empfänger (12) für drahtlos übertragene Signale eines zugehörigen, mobilen Senders (10) aufweist; wobei
(d) die Steuereinheit (14) Mittel zur Bestimmung ihres Abstands zu dem mobilen Sender (10) aufweist; **dadurch gekennzeichnet, dass**
(e) die Wegfahrsperre ein am Fahrzeug befestigbares Schloss (21) mit einer Blockiervorrichtung zum Blockieren der Raddrehung umfasst, wobei die Blockiervorrichtung als gekrümmter Schließbügel (16) ausgebildet ist, der zum Sperren zwischen die Speichen (58) eines Rads (56) bewegbar ist, und
(f) ein von der Steuereinheit (14) gesteuerter Motor (42) zum Antrieb der Blockiervorrichtung vorgesehen ist.

2. Wegfahrsperre nach Anspruch 1, **dadurch gekennzeichnet, dass** der Schließbügel (16) einen verzahnten Winkelbereich (18) aufweist, in welchen ein von dem Motor (42) angetriebenes Zahnrad (20) eingreift.

3. Wegfahrsperre nach einem der vorgehenden Ansprüche, **dadurch gekennzeichnet, dass** die Steuereinheit (14) und der mobile Sender (10) bidirektional kommunizierende Sende- und Empfangseinheiten (12 und 10) umfassen und der Abstand aus der Signalstärke eines zwischen der Steuereinheit (14) und dem mobilen Sender (10) ausgetauschten Signals bestimmt wird.

4. Wegfahrsperre nach einem der vorgehenden Ansprüche, **dadurch gekennzeichnet, dass** der Empfänger (12) in der Steuereinheit zum Empfang und zur Verarbeitung der Signale eines Smartphones, Tablets oder anderen mobilen Endgeräts ausgebildet ist.

5. Wegfahrsperre nach einem der vorgehenden Ansprüche, **gekennzeichnet durch** einen Sensor (50) zur Ermittlung der Rotationsgeschwindigkeit eines Fahrzeugrads.

6. Wegfahrsperre nach einem der vorgehenden Ansprüche, **gekennzeichnet durch** einen Neigungs- und/oder Beschleunigungssensor (48).

7. Wegfahrsperre nach einem der vorgehenden Ansprüche, **gekennzeichnet durch** einen durch die Fahrbewegung aufladbaren Akkumulator (44) oder einer Batteriezelle (160) zur Versorgung der Steuereinheit (14) und/oder der Sensoren mit elektrischer Energie.

8. Wegfahrsperre nach einem der vorgehenden Ansprüche, **gekennzeichnet durch** Sensoren (48 und 50) zur Erfassung von untypischen Zuständen und optische und/oder akustische Mittel (164 und 146) zur Erzeugung eines Warnsignals bei Vorliegen eines untypischen Zustands.

## Claims

1. Anti-theft lock for bicycles and other vehicles driven by humans, which is adapted to switch from a locked state to a move state, comprising:
(a) means for tamper-proof attachment of the anti-theft lock at the vehicle;
(b) a control unit (14) for switching the anti-theft lock from a locking state to a move state and vice versa, wherein the control unit (14) switches the anti-theft lock to the locking state if the distance exceeds a threshold and simultaneously the vehicle does not move, and to a move state, if the distance decreases below a threshold; and
(c) the control unit (14) is provided with a receiver (12) for wireless transmitted signals from a corresponding mobile sender, wherein
(d) the control unit (14) has means for determining the distance to the portable sender; **characterized in that**
(e) the anti-theft lock comprises a lock (21) adapted to be fixed to the vehicle which is provided with a blocking device for blocking the rotation of a wheel, wherein the blocking device is a curved locking bracket (16), adapted to be moved into the range between the spokes (58) of a wheel (56) for locking; and
(f) a motor (42) is provided controlled by the control unit (14) for driving the blocking device.

2. Anti-theft lock according to claim 1, **characterized in that** the locking bracket is provided with a toothed angular range for engaging a gear wheel driven by a motor.

3. Anti-theft lock according to any of the preceding claims, **characterized in that** the control unit (14) and the mobile sender (10) comprise bidirectional communicating sender- and receiver units (12 and 10) and the distance is determined from the signal strength of a signal exchanged between the control unit (14) and the mobile sender (10).

4. Anti-theft lock according to any of the preceding claims, **characterized in that** the receiver in the control unit is adapted to receive and process the signals of a smart phone, a tablet computer or any other mobile end device.

5. Anti-theft lock according to any of the preceding claims, **characterized by** a sensor (50) to determine the rotational speed of a vehicle wheel.

6. Anti-theft lock according to any of the preceding claims, **characterized by** a tilt and/or motion sensor (48).

7. Anti-theft lock according to any of the preceding claims, **characterized by** an accumulator (44) adapted to be recharged by the vehicle movement or a battery cell (160) for providing the control unit (14) and/or the sensors with electrical energy.

8. Anti-theft lock according to any of the preceding claims, **characterized by** sensors (48 and 50) for detecting untypical states and optical and/or acoustic means (164 and 146) for generating a warning signal upon the occurrence of an untypical state.

## Revendications

1. Dispositif antidémarrage pour bicyclettes et tout autre véhicule actionné par une personne pouvant être commuté d'un état de blocage à un état de marche, comprenant
(a) des moyens destinés à fixer le dispositif antidémarrage du véhicule de manière inviolable ;
(b) une unité de commande (14) destinée à commuter le dispositif antidémarrage de l'état de blocage à l'état de marche et inversement, l'unité de commande (14) commutant le dispositif antidémarrage dans l'état de blocage lorsque l'écart dépasse une valeur de seuil et que simultanément le véhicule ne roule pas, et le commutant dans l'état de marche lorsque l'écart est inférieur à une valeur de seuil ; et
(c) l'unité de commande (14) présente un récepteur (12) de signaux transmis sans fil par un émetteur (10) mobile associé ;
(d) l'unité de commande (14) présentant des moyens destinés à déterminer l'écart par rapport à l'émetteur (10) mobile, **caractérisé en ce que**
(e) le dispositif antidémarrage comprend un antivol (21) pouvant être fixé sur le véhicule et muni d'un dispositif de blocage destiné à bloquer la rotation de la roue, le dispositif de blocage étant configuré sous forme d'arceau de fermeture (16) cintré qui peut se déplacer à des fins de blocage entre les rayons (58) d'une roue(56), et
(f) il est prévu un moteur (42) commandé par l'unité de commande (14) et destiné à actionner le dispositif de blocage.

2. Dispositif antidémarrage selon la revendication 1, **caractérisé en ce que** l'arceau de fermeture (16) présente une zone angulaire (18) dentée dans laquelle vient mordre une roue dentée (20) actionnée par le moteur (42).

3. Dispositif antidémarrage selon l'une quelconque des revendications précédentes, **caractérisé en ce que** l'unité de commande (14) et l'émetteur (10) mobile comprennent des unités d'émission et de réception (12 et 10) à communication bidirectionnelle et l'écart est déterminé à partir de l'intensité d'un signal échangé entre l'unité de commande (14) et l'émetteur (10) mobile.

4. Dispositif antidémarrage selon l'une quelconque des revendications précédentes, **caractérisé en ce que** le récepteur (12) est configuré dans l'unité de commande pour la réception et le traitement des signaux d'un smartphone, d'une tablette ou de tout autre terminal mobile.

5. Dispositif antidémarrage selon l'une quelconque des revendications précédentes, **caractérisé par** un capteur (50) destiné à déterminer la vitesse de rotation d'un véhicule.

6. Dispositif antidémarrage selon l'une quelconque des revendications précédentes, **caractérisé par** un capteur d'inclinaison et/ou d'accélération (48).

7. Dispositif antidémarrage selon l'une quelconque des revendications précédentes, **caractérisé par** un accumulateur (44) pouvant se recharger grâce au déplacement du véhicule ou une cellule de batterie (160) destinée à alimenter en énergie électrique l'unité de commande (14) et/ou les capteurs.

8. Dispositif antidémarrage selon l'une quelconque des revendications précédentes, **caractérisé par** des capteurs (48 et 50) destinés à saisir des états atypiques et des moyens (164 et 146) optiques et/ou acoustiques destinés à générer un signal d'alarme en cas d'état atypique.
